Europäisches Patentamt

European Patent Office

Office européen des brevets

(11) Veröffentlichungsnummer: **0 105 449**
**A1**

## (12) EUROPÄISCHE PATENTANMELDUNG

(21) Anmeldenummer: 83109621.9

(22) Anmeldetag: 27.09.83

(51) Int. Cl.³: **G 03 B 21/58**

(30) Priorität: 30.09.82 DE 8227511 U

(43) Veröffentlichungstag der Anmeldung:
18.04.84 Patentblatt 84/16

(84) Benannte Vertragsstaaten:
DE FR GB IT NL SE

(71) Anmelder: Meinunger, Helmut
Ehrenfelsstrasse 3
D-8000 München 70(DE)

(72) Erfinder: Meinunger, Helmut
Ehrenfelsstrasse 3
D-8000 München 70(DE)

(74) Vertreter: Schaefer, Gerhard, Dr.
Seitnerstrasse 13
D-8023 Pullach(DE)

(54) Vorrichtung zum Aufwickeln einer Projektionsleinwand.

(57) Bei einer Vorrichtung zum Aufwickeln einer Projektionsleinwand (1) auf ein in einem Gehäuse (7) drehbar gelagertes
Wickelrohr (2) ist in diesem eine zylindrisch ausgebildete
Schraubenfeder (11) angeordnet. Diese ist an ihren Enden
durch Aufschrauben auf mit Schraubgewinden (3A; 13A)
versehene Befestigungsteile (3; 13) befestigt, welche in dem
Wickelrohr (2) angeordnet sind.

Fig. 1

Vorrichtung zum Aufwickeln einer Projektionsleinwand

Die Erfindung betrifft eine Vorrichtung zum Aufwickeln einer Projektionsleinwand auf ein in einem Gehäuse drehbar gelagertes Wickelrohr, in dem eine schraubenförmige Rückholfeder angeordnet ist.

Bei derartigen Wickelvorrichtungen ist die Feder um eine im Gehäuse gelagerte Achse angeordnet, an einer Seite mittels einer mehrfachen Abwinkelung in einem Befestigungsteil und am anderen Ende in einem Schlitz oder einer Bohrung der Achse gelagert. An dieser Seite ist der Durchmesser der Schraubenfeder so weit verringert, daß diese an der Achse anliegt. Der Durchmesser der übrigen Schraubenfeder ist erheblich größer als der Durchmesser der Achse, damit ein Spannvorgang möglich ist.

Eine derartige Vorrichtung zum Aufwickeln einer Projektionsleinwand ist aufwendig in der Herstellung. Der Erfindung liegt demgemäß die Aufgabe zugrunde, eine wesentlich einfacher aufgebaute und damit kostengünstigere Vorrichtung zu schaffen. Dies wird dadurch erreicht, daß die Schraubenfeder zylindrisch ausgebildet und an ihren Enden durch Aufschrauben auf mit Schraubgewinden versehene Befestigungsteile befestigt ist, die in dem Wickelrohr angeordnet sind.

Erfindungsgemäß kann demgemäß ein Stück einer handelsüblichen, zylindrischen Schraubenfeder verwendet werden, das keiner zusätzlichen Verformung bedarf. Darüber hinaus läßt sich diese Schraubenfeder durch einfaches Aufschrauben auf die Befestigungskörper in besonders einfacher Weise montieren.

Gemäß einer Weiterbildung der Erfindung ist das eine Befestigungsteil im Gehäuse befestigt. Das andere Befestigungsteil kann am Umfang eine Nase aufweisen, die in Eingriff mit einer Ausnehmung in der Wickelrolle steht. Dadurch wird die Schraubenfeder beim Herausziehen der Leinwand gespannt.

Weitere Einzelheiten und Vorteile der Erfindung können dem in der Zeichnung dargestellten Ausführungsbeispiel entnommen werden.

Es zeigen:

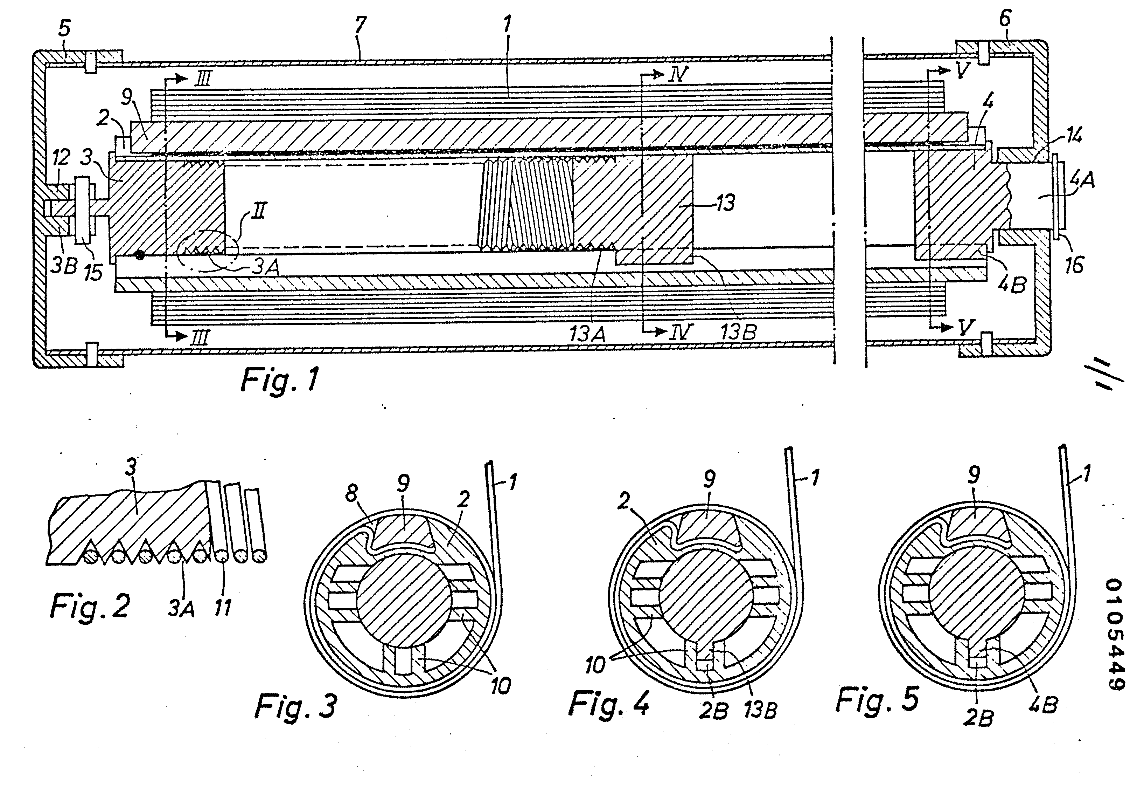

Fig. 1    einen Längsschnitt durch die erfindungsgemäße Vorrichtung;

Fig. 2    den in Fig. 1 mit II bezeichneten Ausschnitt in vergrößertem Maßstab;

Fig. 3    einen Querschnitt durch die in Fig. 1 dargestellte Rolle längs der Linie III-III;

Fig. 4    einen Querschnitt durch die in Fig. 1 dargestellte Vorrichtung längs der Linie IV-IV;

Fig. 5    einen Querschnitt durch die in Fig. 1 dargestellte Vorrichtung längs der Linie V-V.

Bei dem in den Figuren schematisch dargestellten Aufführungsbeispiel ist die Leinwand 1 in bekannter Weise auf eine Wickelrolle 2 aufgewickelt, die mittels eines Befestigungsteils 3 und eines Lagerteils 4 in den Endkappen 5 und 6 eines Gehäuses 7 gelagert ist. Die Endkappen 5 und 6 sind in bekannter Weise am Gehäuse 7 befestigt, das einen (nicht dargestellten) Schlitz zum Herausziehen der Leinwand 1 aufweist.

In der Wickelrolle 2 ist mittels eines in eine Längsnut 8 einsetzbaren Befestigungsteils 9 die Leinwand 1 befestigt. Im Innern weist die Wickelrolle 2 Vorsprünge 10 auf, auf denen die Befestigungsteile 3 und 13 sowie das Lagerteil 4 gelagert sind.

Erfindungsgemäß sind die Rückholfeder 11 sowie deren Befestigungsteile 3 und 13 in neuartiger Weise ausgebildet. Die Schraubenfeder 11 ist zylinderförmig ausgebildet und an ihrem einen Ende auf ein auf das Befestigungsteil 3 aufgebrachtes Gewinde 3A aufgeschraubt. Am anderen Ende ist die Rückholfeder 11 in gleicher Weise auf das Gewinde 13A eines im Wickelrohr 2 angeordneten Befestigungsteils 13 aufgeschraubt. Dieses Befestigungsteil 13 weist am Umfang eine Nase 13B auf, die in eine durch die Vorsprünge 10 gebildete Ausnehmung 2B des Wickelrohres 2 eingreift. Das Befestigungsteil 3 ist an seiner Stirnseite mit einem zentrischen Vorsprung 3B versehen, der in eine entsprechend ausgebildete Ausnehmung des in der Endkappe 5 vorgesehenen Vorsprungs 14 eingreift und dort drehgesichert gehaltert ist. Als Beispiel hierfür dient in der dargestellten Ausführung ein Bolzen 15.

Das am anderen Ende des Wickelrohres 2 angeordnete Lagerteil 4 ist ebenfalls mit einer Nase 4B versehen, die in eine Ausnehmung 2B des Wickelrohres 2 eingreift und so bei dessen Drehung mitgenommen wird. Das Lagerteil 4 weist eine Drehachse 4A auf, die in einer zylindrischen Ausnehmung 14 der Endkappe 6 gelagert und durch eine Schreibe 16 gesichert ist.

Die Montage der Vorrichtung erfolgt in einfacher Weise, indem zunächst die Schraubenfeder 11 auf die Gewinde 3A bzw. 13A der Befestigungsteile 3 bzw. 13 aufgeschraubt wird. Danach wird die montierte Schraubenfeder 11 mit ihren Befestigungsteilen 3 und 13 in die Wickelrolle 2 eingeschoben, wobei die Nase 13B in die Ausnehmung 2B eingreift. Danach wird die Leinwand 1 auf die Wickelrolle 2 aufgewickelt. Anschließend wird die Wickelrolle 2 mit aufgewickelter Leinwand 1 mit dem Vorsprung 3B des Befestigungsteils 3 in die Ausnehmung 12 der Endkappe 6 des Gehäuses 7 eingeschoben und dort befestigt. Schließlich wird die Abdeckkappe 6 aufgesetzt und befestigt. Die durch die Bohrung 14 der Endkappe 6 hindurchgehende Drehachse 4A des Lagerteils 4 wird danach durch eine Sicherungsscheibe 16 befestigt.

Beim Herausziehen der Leinwand 1 dreht sich die Wickelrolle 2 um die Achse 4A und nimmt das Befestigungsteil 13 über die Nase 13B mit, wodurch sich die Feder 11 spannt. Beim Loslassen der Leinwand dreht die Rückholfeder die Wickelrolle 2 in umgekehrter Richtung und die Leinwand 1 wickelt sich automatisch wieder auf die Wickelrolle 2 auf.

Wickelrolle 2, Befestigungs- und Lagerteile 3, 13, 4 sowie die Abdeckkappen 5 und 6 können vorteilhafterweise aus Kunststoff gefertigt sein.

Patentansprüche

1. Vorrichtung zum Aufwickeln einer Projektionsleinwand auf ein in einem Gehäuse drehbar gelagertes Wickelrohr, in dem eine schraubenförmige Rückholfeder angeordnet ist, dadurch gekennzeichnet, daß die Schraubenfeder (11) zylindrisch ausgebildet und an ihren Enden durch Aufschrauben auf mit Schraubgewinden (3A; 13A) versehene Befestigungsteile (3; 13) befestigt ist, die in dem Wickelrohr (2) angeordnet sind.

2. Vorrichtung nach Anspruch 1, dadurch gekennzeichnet, daß das eine Befestigungsteil (3) im Gehäuse (6) befestigt ist.

3. Vorrichtung nach Anspruch 1 oder 2, dadurch gekennzeichnet, daß das andere Befestigungsteil (13) am Umfang eine Nase (13B) aufweist, die in Eingriff mit einer Ausnehmung (28) in der Wickelrolle (2) steht.

Fig. 1

Fig. 2

Fig. 3

Fig. 4

Fig. 5

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-4 169 658 (D.J. BROWN)<br>* Spalten 2,3; Figur 7 * | 1,2 | G 03 B 21/58 |
| Y | US-A-2 464 903 (J.R.M. TISDALE)<br>* Spalten 2,3; Figuren 1-4 * | 1,2 | |
| Y | US-A-3 228 455 (R.E. JACOBSON)<br>* Spalten 4-7; Figur 10 * | 1,2 | |
| Y | US-A-1 641 506 (S.P. SMURR)<br>* Seiten 1,2; Figur 1 * | 1,2 | |

RECHERCHIERTE
SACHGEBIETE (Int. Cl. 3)

G 03 B 21/58
E 06 B 9/20

Der vorliegende Recherchenbericht wurde für alle Patentansprüche erstellt.

| Recherchenort | Abschlußdatum der Recherche | Prüfer |
|---|---|---|
| DEN HAAG | 04-01-1984 | BOEYKENS J.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82